# EUROPÄISCHE PATENTSCHRIFT

(11) **EP 2 068 127 B1**
(45) Veröffentlichungstag und Bekanntmachung des Hinweises auf die Patenterteilung: **05.01.2011**
(21) Anmeldenummer: 08105753.1
(22) Anmeldetag: 10.11.2008
(51) Int. Cl.: G01D 11/30, F16B 37/04

(54) **Vorrichtung zur lösbaren Verbindung eines Sensors**
Device for releasably attaching a sensor
Dispositif permettant de fixer détachable un capteur

(30) Priorität: 03.12.2007 DE 102007058411
(43) Veröffentlichungstag der Anmeldung: 10.06.2009
(73) Patentinhaber: SICK AG, 79183 Waldkirch (DE)
(72) Erfinder: Greger, Walter, 79102, Freiburg (DE); Neuhaeuser, Torsten, 79353, Bahlingen (DE)
(74) Vertreter: Ludewigt, Christoph

(56) Entgegenhaltungen:
- DE-A1-102005 040 361
- DE-B3- 10 231 481
- DE-U1- 29 811 811
- JP-A- 8 105 424
- US-A- 4 875 259
- US-A- 5 553 511

## Beschreibung

Die Erfindung bezieht sich auf eine Vorrichtung zur lösbaren Verbindung eines Sensors gemäß dem Oberbegriff des Anspruchs 1, insbesondere eines Magnetfeldsensors.

Magnetfeldsensoren haben sich zur genauen Positionsbestimmung durch berührungsloses Erfassen der Stellung von z. B. Pneumatik- oder Hydraulikkolben innerhalb eines Arbeitszylinders bewährt. Zur Halterung der Sensoren sind an den Außenflächen des Gehäuses des Arbeitszylinders Führungsnuten angebracht, in welchen die Magnetfeldsensoren axial verstellbar gehalten sind. In einer gewünschten Position in Längsrichtung der Nut können die Sensoren über geeignete Mittel, beispielsweise Schrauben, arretiert werden.

Eine derartige Halterung von Magnetfeldsensoren an einem Arbeitszylinder ist aus der DE 44 35 671 A1 bekannt. Der darin beschriebene Magnetfeldsensor hat im Wesentlichen einen kreisförmigen Querschnitt und wird in einer zylindrischen Nut mit entsprechendem kreisförmigen Querschnitt, die nach außen offen ist, also in einer C-Nut, gehalten.

Aus der DE 196 43 413 und DE 196 53 222 sind Magnetfeldsensoren bekannt, welche einen derartigen Querschnitt aufweisen, so dass sie an jeder beliebigen Stelle in eine Führungsnut, die als T-Nut ausgebildet ist, eingesetzt werden können. Dazu haben die Magnetfeldsensoren einen ovalartigen Querschnitt, so dass sie über ihre Schmalseite in eine Führungsnut eingesetzt und nach dem Einsetzen in der Führungsnut gedreht werden können. In dieser Stellung können sie nicht mehr aus der T-Nut herausfallen, sondern nur noch in Längsrichtung verschoben werden. In einer gewünschten Position können die Sensoren arretiert werden. Die Arretierung des Magnetfeldsensors erfolgt dadurch, dass mittels einer Feststellschraube, welche sich am Nutboden abstützt, der Sensor gegen die Nutschulter gepresst wird. Nachteilig an diesem bekannten Stand der Technik ist jedoch, dass durch die zwangsläufig vorhandenen mechanischen Toleranzen der Führungsnut und die Toleranzen im Querschnitt des Magnetfeldsensors, der Luftabstand des Sensors zum Arbeitszylinder im Gehäuse verändert wird. Diese Abstandsveränderung führt zwangsläufig zu einer Magnetfeldänderung, die sich hinsichtlich der Funktionsgenauigkeit des Sensors negativ auswirkt. Ein weiterer Nachteil ist darin zu sehen, dass die Magnetfeldsensoren bei dieser Art der Arretierung mittels der Feststellschraube mechanisch belastet werden, was zum Verbiegen oder gar zur Beschädigung der Magnetfeldsensoren führen kann.

Die DE 298 11 811 U1 betrifft eine Vorrichtung zur lösbaren Verankerung eines Sensors in einer längsseits offenen Verankerungsnut eines Bauteils, mit einer mit dem Sensor verbundenen Klemmeinrichtung. Die Klemmeinrichtung weist ein drehbewegliches Klemmteil auf, das bei in die Verankerungsnut eingesetztem Sensor durch Verdrehen in eine Klemmstellung verbringbar ist, in der es mit der Innenfläche der Verankerungsnut verspannt ist.

Die DE 102 31 481 B3 zeigt eine Befestigungsvorrichtung zur lösbaren klemmenden Befestigung eines Sensors in einer als T-Nut ausgebildeten Befestigungsnut. Die Befestigungsvorrichtung verfügt über einen Sensorträger und ein daran gelagertes Klemmteil.

Die DE 10 2005 040 361 A1 zeigt eine metallische Pressverbindung zwischen zwei metallischen Bauteilen, wobei wenigstens ein Bauteil eine oberflächenaufrauende Struktur aufweist. Die Struktur kann furchen- oder rillenartig ausgebildet sein.

Das Abstract der JP 08 105424 zeigt ein Aufnahmeelement für eine Schraube, das an seiner Außenseite ein Anpressen erlaubt.

Die US 4,875,259 zeigt Elemente mit korrespondierenden verzahnten Oberflächen, die aufgrund von Reibkräften aneinander haften.

Die US 5,553,511 zeigt eine Halterung für einen Fahrradlenker. Es ist eine gerändelte oder nutförmige Oberfläche vorgesehen, um eine Haltekraft zu erhöhen.

Ausgehend von diesem Stand der Technik liegt der Erfindung die Aufgabe zugrunde, eine verbesserte Vorrichtung zur Halterung eines Sensors bereitzustellen, die eine einfache und sichere Befestigung ein- und desselben Sensors in unterschiedlich große Befestigungsnuten ermöglicht.

Diese Aufgabe wird gelöst durch eine Vorrichtung zur lösbaren Verbindung eines Sensors in einer längsseits offenen Befestigungsnut, mit einem mit dem Sensor verbundenen drehbeweglichen Klemmteil, das bei in die Befestigungsnut eingesetztem Sensor durch Verdrehen in eine Klemmstellung verbringbar ist, in der es mit gegenüberliegenden Innenflächen der Befestigungsnut verspannt ist. Das Klemmteil weist zwei bezüglich seiner Drehachse radial nach außen weisenden Klemmflächen auf, die sich an bezüglich der Drehachse gegenüberliegenden Stellen des Klemmteils befinden und eine exzentrische Form bilden, über die das Klemmteil in der Klemmstellung zwischen den Innenflächen verspannt ist. Die Klemmflächen weisen eine strukturierte Oberfläche auf, über die eine teilweise formschlüssige Verbindung zwischen den Klemmflächen und den Innenflächen gebildet ist.

Durch die strukturierte Oberfläche wird das Klemmteil bei der Verdrehung teilweise formschlüssig mit den Innenflächen der Befestigungsnut verbunden, indem die Innenfläche der Nut durch die Struktur auf dem Klemmteil geringfügig verformt wird und so ein Ineinandergreifen der strukturierten Oberfläche mit der Innenfläche der Befestigungsnut erfolgt. Bei diesem teilweise vorliegenden Formschluss werden die Klemmkräfte, welche durch die Verdrehung des Klemmteiles verursacht werden, auf die Seitenflächen der Befestigungsnut übertragen. Durch diese mechanisch Verbindung kann sich die Verbindung zwischen dem Klemmteil und der Befestigungsnut auch bei unterbrochener Kraftübertragung nicht mehr lösen. Durch den teilweisen Formschluss, zusätzlich zu dem durchgeführten Kraftschluss, ist der Sensor in der Befestigungsnut sicherer gehalten, beispielsweise auch bei extremen Umgebungsbedingungen wie erhöhten Vibrationen oder außergewöhnlich Schwingund Schockbedingungen.

Durch das seitliche Verklemmen treten auch nur Belastungskräfte auf, die sich auf das Klemmteil auswirken. Auf den Sensor selbst werden bei der Befestigung durch die Drehbewegung keine mechanischen Kräfte ausgeübt. Eine Beschädigung des Sensors, beispielsweise durch zu hohe Drehkräfte bei einer Befestigung, sind daher ausgeschlossen. Durch die exzentrische Form des Klemmteils beim Verdrehen in der Befestigungsmut ist lediglich maximal eine halbe Umdrehung des Klemmteils notwendig, um ein Verklemmen durchzuführen.

Dadurch, dass das Klemmteil scheibenförmig ausgebildet ist, bleibt an der Stelle, an der das Klemmteil in den Sensor integriert ist, genügend Platz, um ein Anschlusskabel oder Elektronikkomponenten unterzubringen.

Die strukturierte Oberfläche weist eine Zahnstruktur oder Sägezahnstruktur auf, wobei eine Zahnrichtung entgegen einer Drehrichtung zum Verklemmen des Klemmteils ausgerichtet ist. Durch die Ausrichtung der Zahnstruktur schneiden sich die Zähne bei der Verdrehung des Klemmteils in das Material der Seitenwände der Befestigungsnut. Dadurch, dass die Zähne entgegen der Drehrichtung ausgerichtet sind, rasten die Zähne in dem Material der Befestigungsnut entsprechend ein. Hierdurch wird das Drehmoment bei einer entgegengesetzten Bewegung zur Lösung des Klemmteils aus der Befestigungsnut erhöht und es ergibt sich ein erhöhtes Loslösmoment gegenüber dem Befestigungsmoment, wodurch der Sensor gegen ein unbeabsichtigtes Lösen aus der Befestigungsnut gesichert ist.

In einer besonderen Ausführungsform weist die strukturierte Oberfläche eine Rändelstruktur auf. Eine Rändelstruktur ist einfach herstellbar und weist vorteilhaft eine Vielzahl von einzelnen Spitzen oder Zähnen auf, wodurch ein besonders stabiler Sitz zwischen den Innenflächen der Befestigungsnut gewährleistet wird. Insbesondere wenn der Sensor in der Befestigungsnut mehrfach befestigt und wieder gelöst wird, ist durch die Vielzahl der vorhandenen Zähne immer eine optimale Befestigung gewährleistet. Je nach Herstellungsverfahren wird das Rändel in das Klemmteil eingedrückt oder bereits in einer Herstellungsform berücksichtigt.

In einer bevorzugten Ausführungsform weisen die Zähne eine parallele Richtung zur Drehachse auf. Durch die parallele Ausrichtung der Zähne zur Drehachse wird das Klemmteil und der damit verbundenen Sensor bei einer Verklemmung durch die Drehbewegung nicht aus der Befestigungsnut nach oben oder unten in Richtung der Drehachse heraus bewegt. Durch die einfache geometrische Form der Zähne ist das Klemmteil auch durch eine einfache Herstellungsform preiswert und einfach herstellbar.

Bevorzugt ist das Klemmteil ein Metallspritzgussteil. Das Klemmteil lässt sich besonders einfach durch das Metallspritzgussverfahren herstellen, welches auch als Metal Injection Molding (MIM) Verfahren bekannt ist. Dadurch lässt sich das Klemmelement in besonders hohen Stückzahlen wirtschaftlich und besonders preiswert herstellen.

In Weiterbildung der Erfindung besteht das Klemmteil aus einem metallischen, nichtmagnetischen Material, insbesondere Edelstahl. Um ein Sensorverhalten, beispielsweise eines magnetischen Sensors nicht zu beeinträchtigen, ist es von Vorteil nichtmagnetische Metalle zu verwenden. Für einen Einsatz in der Lebensmittelindustrie ist es vorgesehen, dass das Klemmteil aus Edelstahl besteht. Dadurch wird die Funktion des Klemmteils auch unter schwierigsten Umgebungsbedingungen, beispielsweise bei häufigem Reinigen oder beim Einsatz in Industrieumgebungen mit Schmier- und Lösungsmitteln, nicht beeinträchtigt.

Das Klemmteil ist durch einen Kunststoffspritzvorgang mit dem Sensor verbindbar. Das Klemmteil weist hierzu an der dem Sensor zugewandten Seite, einen kegelförmigen Abschnitt auf, welcher mit dem Sensor in einem Kunststoffspritzvorgang verbunden wird. Hierdurch ist es besonders einfach möglich, das Klemmteil in den Sensor zu integrieren. Solche Sensoren werden üblicherweise durch ein Kunststoffspritzverfahren hergestellt, wobei in einem ersten Spritzvorgang eine vorgesehene Elektronik und ein Anschlusskabel des Sensors mit Kunststoff umspritzt wird. Anschließend wird in einem zweiten Spritzvorgang das Klemmteil mit dem Sensor verbunden. Dadurch ist der Sensor flüssigkeits-, staub- oder auch gasdicht abgeschlossen und das Klemmteil zusätzlich drehbeweglich in den Sensor integriert.

Das Klemmteil ist vorzugsweise über eine axial feststehende Achse mit dem Sensor verbunden. Dadurch wird das Klemmteil nicht relativ zum Sensor bewegt, wodurch der Sensor bei einer Befestigung genau in der gewünschten Position bleibt. Insbesondere wenn der Sensor zu einer Positionserfassung oder Wegerfassung eines Kolbens eines Pneumatikzylinders benötigt wird, ist es besonders wichtig, dass der Sensor sehr genau an einer gewünschten Position befestigt wird.

Jedoch kann es auch vorgesehen werden, dass das Klemmteil über einen Gewindesockel mit dem Sensor verschraubbar ist. Dadurch ist das Klemmteil einfach austauschbar, falls das Klemmteil Beschädigungen aufweist oder für spezielle Befestigungsnutformen angepasst werden muss.

Die Erfindung macht es möglich, dass das Klemmteil an einem kabelseitigen Ende des Sensors angeordnet werden kann, denn das Klemmteil muss den Sensor nicht vollständig durchsetzen, so dass Platz für das Kabel und/oder weitere Elektronik bleibt. Mechanische Belastungskräfte auf den Sensor werden meist durch das vorhandene Anschlusskabel des Sensors verursacht. Um eine Hebelwirkung möglichst zu vermeiden, ist das Klemmteil an dem Kabelende des Sensors vorgesehen, wodurch die auftretenden Kräfte auf den Sensor, insbesondere Hebelkräfte, minimiert werden. Dabei kann es auch vorgesehen sein, dass mehrere Klemmteile insbesondere bei größeren Sensoren oder bei erhöhten Belastungsanforderungen an dem Sensor vorgesehen sind. Diese sind dann vorzugsweise an den jeweiligen Enden des Sensors angebracht.

Bevorzugt weist das Klemmteil einen Betätigungsabschnitt auf, der als Längsnut, Kreuzschlitz, Innensechskant oder als Torxaufnahme ausgebildet ist zur Aufnahme eines Werkzeugs zum Verdrehen des Klemmteils. Durch den vorgesehenen Betätigungsabschnitt lässt sich der Sensor besonders einfach mit herkömmlichen Werkzeugen beispielsweise einem Schraubendreher oder einem Sechskantschlüssel oder einem Torxschlüssel befestigen.

Die Befestigungsnut ist eine T-Nut oder C-Nut. Erfindungsgemäß kann ein und derselbe Sensor mit dem Klemmteil in verschiedenen Befestigungsnuten eingesetzt und befestigt werden. Dabei kann die Nutweite auch unterschiedlich sein. Das Klemmteil des Sensors muss hierbei lediglich etwas weniger oder mehr verdreht werden, je nach Weite der Befestigungsnut, um den Sensor durch das Klemmteil zwischen den Seitenwänden der Befestigungsnut zu verklemmen. Dadurch wird der Sensor vielfältig einsetzbar.

Die Erfindung bezieht sich insbesondere auf magnetische oder induktive Sensoren, insbesondere magnetische oder induktive Wegsensoren oder magnetische oder induktive Schalter, die häufig an einem Gehäuse eines Arbeitszylinders angeordnet werden. Solche Sensoren haben sich zur genauen Positionsbestimmung durch berührungsloses Erfassen der Stellung von z. B. Pneumatik- oder Hydraulikkolben innerhalb des Arbeitszylinders bewährt. Zu diesem Zweck sind an den Außenflächen des Gehäuses des Arbeitszylinders Befestigungsnuten angebracht, in welchen die Magnetfeldsensoren axial verstellbar gehalten sind und nach Justierung in der Befestigungsnut arretiert werden. Ein so justierter und befestigter Sensor gibt in Abhängigkeit der Kolbenstellung ein Schaltsignal aus. Häufig sind pro Hubweg eines Kolbens mehrere Schaltpunkte gewünscht. Zumeist ist die eingefahrene Endlage und die ausgefahrene Endlage des Kolbens zu erfassen.

Im Folgenden wird die Erfindung an Hand von Ausführungsbeispielen unter Bezugnahme auf die Zeichnung im Einzelnen erläutert. In der Zeichnung zeigen:
- Figur 1: eine schematische Darstellung eines Sensors in einer Befestigungsnut;
- Figur 2: eine schematische Darstellung eines Sensors mit einer Vorrichtung zur lösbaren Verbindung;
- Figur 3: eine schematische Darstellung des Klemmteils;
- Figur 4: eine Darstellung von Radien zweier Klemmflächen des Klemmteils
- Figur 5: eine schematische Darstellung des Klemmteils in einer Seitenansicht;
- Figur 6 und 7: eine schematisch Darstellung des Klemmteils an dem Sensor beim Betätigen zur Befestigung.

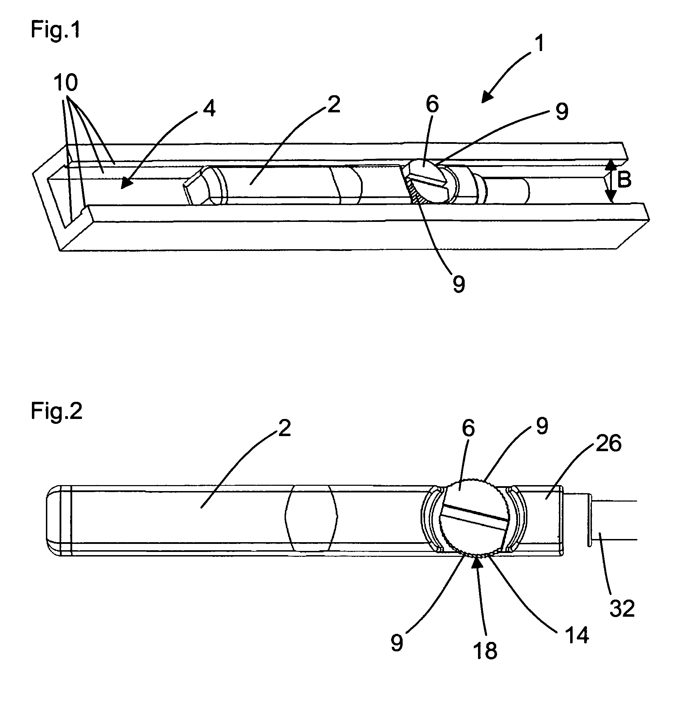

In einer erfindungsgemäßen Vorrichtung 1, die in Figur 1 in einer perspektivischen Ansicht dargestellt ist, ist ein Sensor 2, vorzugsweise ein Magnetfeldsensor, in einer Befestigungsnut 4 mittels eines Klemmteils 6 axial verstellbar gehalten. Die Befestigungsnut 4 erstreckt sich in einer Längsrichtung. Der Sensor 2 weist zur einfachen Einführung in die Befestigungsnut 4 vorzugsweise abgerundete Kanten auf oder ist auch zylindrisch ausgebildet. Die Befestigungsnut 4 weist einen Nutboden, Innenflächen 10 und eine sich in Längsrichtung der Befestigungsnut 4 erstreckende Nutöffnung auf. Die Innenflächen 10 weisen ggf. Hinterschneidungen auf, wodurch längsseits der Nutöffnung Nutschultern gebildet sind. Jedoch ist der Sensor 2 auch in einer C-förmigen Nut ohne Hinterschneidungen befestigbar. Dabei ist der Sensor 2 schmaler als die Befestigungsnut 4, so dass er problemlos durch die Nutöffnung in die Nut 4 eingesetzt werden kann. Das Klemmteil 6 ist über eine kegelförmige Ausformung an dem Sensorgehäuse befestigbar.

Bei dem in die Befestigungsnut 4 eingesetzten Sensor 2 und Verdrehen des Klemmteils 6 an dem Sensor 2, nähern sich die Klemmflächen 9 durch die exzentrische Form den Innenflächen 10 der Befestigungsnut 4 an, wodurch der Sensor 2 gegen die Innenflächen 10 verspannt wird und der Sensor 2 in der Befestigungsnut 4 befestigt wird.

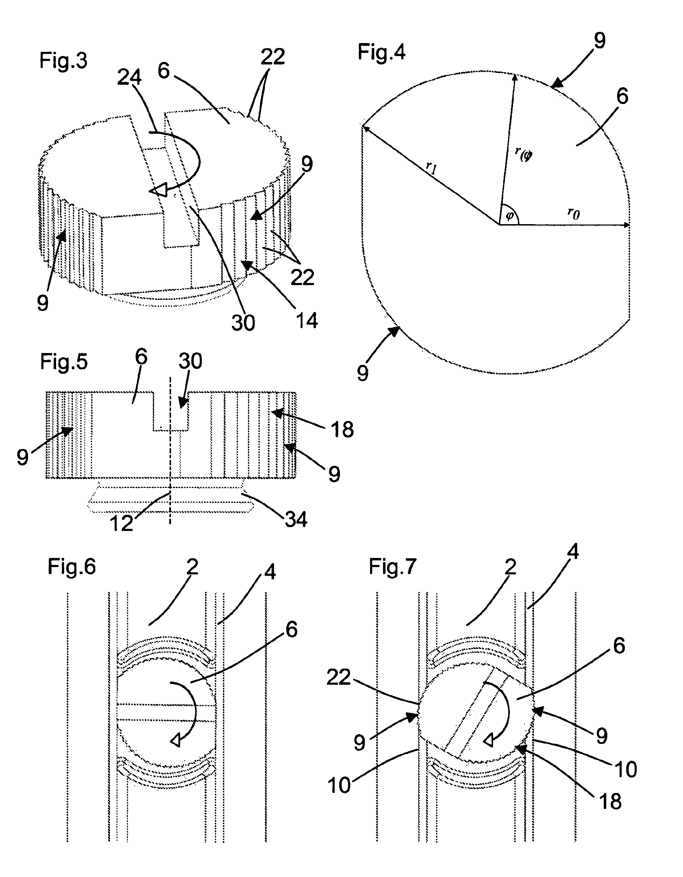

Da ein Durchmesser des Klemmteils 6 in einer ersten Einsetzstellung (Fig. 6) kleiner ist als eine Breite B der Nutöffnung der Befestigungsnut 4, kann der Sensor 2 einfach in die Befestigungsnut 4 eingesetzt werden. Zum Feststellen kann danach das Klemmteil 6 gedreht werden bis der Sensor 2 fest zwischen den Innenfläche 10 befestigt ist.

Figur 2 zeigt das Klemmteil 6 des Sensors 2 in einer Draufsicht von oben. Dabei ist das Klemmteil 6 in einer Klemmstellung bereits um mehr als eine viertel Umdrehung in eine Klemmstellung gebracht, um den Sensor 2 mit einer Innenfläche der Befestigungsnut 4 zu verklemmen. Die seitlichen Klemmflächen 9 des Klemmteils 6 sind dabei mit einer strukturierten Oberfläche 14 versehen. In diesem Fall ist die strukturierte Oberfläche 14 aus einer Zahnstruktur 18, mit Zähnen, die parallel zur Drehachse des Klemmteils 6 verlaufen, gebildet. Das Klemmteil 6 ist vorteilhafterweise an dem Kabelende 26 des Sensors 2 angeordnet. Dadurch werden Hebelkräfte, die auf den Sensor 2 aufgrund von Bewegungen des Kabels 32 wirken, reduziert.

In Figur 3 ist das Klemmteil 6 vergrößert dargestellt. Die verzahnte strukturierte Oberfläche 14 der Klemmfläche 9 ist derart ausgebildet, dass die Zähne 22 gegen die Drehrichtung 24 ausgerichtet sind. Dadurch greifen die Zähne 22 in die Innenflächen 10 der Befestigungsnut 4 derart, dass ein Drehmoment in Drehrichtung 24 kleiner ist als ein aufzubringendes Drehmoment entgegen der Drehrichtung 24. Dadurch wird gewährleistet, dass sich das Klemmteil 6 nach einem Befestigungsvorgang nicht selbstständig lösen kann. Das Klemmteil 6 ist dabei vorzugsweise als Metallspritzgussteil hergestellt. Dadurch ist das Klemmteil 6 insbesondere für hohe Stückzahlen sehr preiswert herstellbar. Bei dem zu verwendenden Material handelt es sich vorzugsweise um nichtmagnetisches Metall und/oder Edelstahl.

Die Drehbewegung kann mit einem einfachen Werkzeug, beispielsweise einem Schraubendreher, einem Innensechskantschlüssel oder anderen handelsüblichen Werkzeugen vorgenommen werden. Zur Aufnahme des Schraubendrehers weist das Klemmteil 6 einen Längsschlitz 30 auf.

Figur 4 zeigt schematisch den Verlauf der Klemmflächen 9 des Klemmteils 6 in der Draufsicht für verschiedene Nutweiten oder Schulterbreiten einer Befestigungsnut. Der Radius r0 entspricht dabei der halben minimal vorkommenden Nutweite. Der Radius r1 entspricht dabei der halben maximal vorkommenden Nutweite. Die Klemmfläche 9 ist dabei so ausgebildet, dass der Radius beginnend von Radius r0 über die Klemmfläche 9 gleichmäßig bis zu dem Radius r1 zunimmt. Dadurch steigt eine Klemmkraft beim Verdrehen des Klemmteils 6 gegenüber den Innenflächen gleichmäßig an bis ein optimaler Klemmpunkt erreicht ist.

Figur 5 zeigt das Klemmteil 6 in einer Seitenansicht mit der Drehachse 12. Gegenüber dem Längsschlitz 30 ist eine kegelförmige Form 34 ausgebildet zur Aufnahme des Klemmteils 6 in ein Kunststoffgehäuse des magnetischen Sensors. Solche Sensoren werden gewöhnlich in einem Kunststoffspritzgussverfahren hergestellt, bei dem in einem ersten Schritt der Sensor mit einer Auswerteelektronik und einem Anschlusskabel verspritzt wird. In einem zweiten Verfahrensschritt wird dann das Klemmteil 6 an der erforderlichen Position mit dem finalen Gehäuse des Sensors verspritzt. In dem Kunststoffspritzwerkzeug ist dabei vorgesehen, dass zwischen den Klemmflächen 9 und dem Sensorgehäuse Platz bleibt, um das Klemmteil 6 zu bewegen. Damit dieser Platz auch während des Spritzvorganges nicht mit Kunststoff gefüllt wird, weist das Klemmteil 6 an der Seite der kegelförmigen Form noch einen nicht dargestellten minimalen Rand auf, damit der Kunststoff nicht durch die Zahnstruktur 18 des Klemmteils 6 fließen kann.

Figur 6 zeigt einen Ausschnitt einer Befestigungsnut 4 mit dem bereits eingesetzten Sensor 2 in der Draufsicht. Nachdem der Sensor 2 eingesetzt wurde wird das Klemmteil 6 mit Hilfe des Schraubendrehers in Pfeilrichtung in eine Klemmstellung 8 gedreht. Die Klemmflächen 9 mit der Zahnstruktur 18 werden dann gemäß Figur 7 innerhalb einer halben Umdrehung gegen die Innenflächen 10 der Befestigungsnut 4 gedrückt. Die auftretenden Kräfte wirken sich dabei nur auf das Klemmteil 6, nicht jedoch auf den Sensor 2 aus. Dadurch können auch hohe Klemmkräfte mit dem Schraubendreher ausgeübt werden, ohne den Sensor 2 zu beschädigen. Durch die wirkenden Kräfte pressen sich die Zähne 22 in das Material, bevorzugt Aluminium, der Innenflächen 10 der Befestigungsnut 4 und führen zu einem teilweisen Formschluss mit der Innenfläche 10. Zusätzlich zu dem entstehenden Kraftschluss wird durch den teilweisen Formschluss eine stabile Befestigung des Sensors 2 erreicht. Um den Sensor 2 zu lösen, muss nun aufgrund der Verzahnungsrichtung ein höheres Drehmoment auf das Klemmteil 6 ausgeübt werden als beim Befestigen. Jedoch kann der Sensor 2 auch uneingeschränkt gelöst werden um eine neue Platzierung des Sensors 2 vorzunehmen.

### Bezugszeichen:

- 1: Vorrichtung
- 2: Sensor
- 4: Befestigungsnut
- 6: Klemmteil
- 8: Klemmstellung
- 9: Klemmfläche
- 10: Innenfläche
- 12: Drehachse
- 14: strukturierte Oberfläche
- 16: formschlüssige Verbindung
- 18: Zahnstruktur
- 20: Zahnrichtung
- 22: Zahn
- 24: Drehrichtung
- 26: Kabelende
- 28: Betätigungsabschnitt
- 30: Längsschlitz
- 32: Kabel
- 34: kegelförmige Form
- B: Breite

## Patentansprüche

1. Vorrichtung zur lösbaren Verbindung eines Sensors (2) in einer längsseits offenen Befestigungsnut (4),
- mit einem Kabel, das an einem Kabelende des Sensors angeordnet ist,
- mit einem mit dem Sensor verbundenen drehbeweglichen Klemmteil (6), das bei in die Befestigungsnut (4) eingesetztem Sensor (2) durch Verdrehen in eine Klemmstellung (8) verbringbar ist, in der es mit gegenüberliegenden Innenflächen (10) der Befestigungsnut (4) verspannt ist,
- das Klemmteil (6) zwei bezüglich seiner Drehachse (12) radial nach außen weisenden Klemmflächen (9) aufweist, die sich an bezüglich der Drehachse (12) gegenüberliegenden Stellen des Klemmteils (6) befinden und eine exzentrische Form bilden, über die das Klemmteil (6) in der Klemmstellung (8) zwischen den Innenflächen (10) verspannt ist
**dadurch gekennzeichnet,**
**dass** die Klemmflächen (9) eine strukturierte Oberfläche (14) aufweisen, über die eine teilweise formschlüssige Verbindung zwischen den Klemmflächen (9) und den Innenflächen (10) gebildet ist und das Klemmteil an dem Kabelende des Sensors angeordnet ist.

2. Vorrichtung nach Anspruch 1, **dadurch gekennzeichnet, dass** die strukturierte Oberfläche (14) eine Zahnstruktur (18) oder Sägezahnstruktur aufweist, wobei eine Zahnrichtung entgegen einer Drehrichtung (24) zum Verklemmen des Klemmteils (6) ausgerichtet ist.

3. Vorrichtung nach einem der vorhergehenden Ansprüche, **dadurch gekennzeichnet, dass** die strukturierte Oberfläche (14) eine Rändelstruktur aufweist.

4. Vorrichtung nach Anspruch 2, **dadurch gekennzeichnet, dass** die Sägezahnstruktur aus Zähnen (22) eine parallele Richtung zur Drehachse (12) aufweisen.

5. Vorrichtung nach einem der vorhergehenden Ansprüche, **dadurch gekennzeichnet, dass** das Klemmteil (6) ein Metallspritzgussteil ist.

6. Vorrichtung nach einem der vorhergehenden Ansprüche, **dadurch gekennzeichnet, dass** das Klemmteil (6) aus einem nichtmagnetischen metallischem Material, insbesondere Edelstahl, besteht.

7. Vorrichtung nach einem der vorhergehenden Ansprüche, **dadurch gekennzeichnet, dass** das Klemmteil (6) durch einen Kunststoffspritzvorgang mit dem Sensor (2) verbindbar ist.

8. Vorrichtung nach einem der vorhergehenden Ansprüche, **dadurch gekennzeichnet, dass** das Klemmteil (6) über eine axial feststehenden Achse mit dem Sensor (2) verbunden ist.

9. Vorrichtung nach einem der vorhergehenden Ansprüche, **dadurch gekennzeichnet, dass** das Klemmteil (6) über einen Gewindesockel mit dem Sensor (2) verschraubbar ist.

10. Vorrichtung nach einem der vorhergehenden Ansprüche, **dadurch gekennzeichnet, dass** das Klemmteil (6) einen Betätigungsabschnitt (28) aufweist, der als Längsschlitz (30), Kreuzschlitz, Innensechskant oder als Torxaufnahme ausgebildet ist zur Aufnahme eines Werkzeugs zum Verdrehen des Klemmteils (6).

11. Vorrichtung nach einem der vorhergehenden Ansprüche, **dadurch gekennzeichnet, dass** die Befestigungsnut (4) eine T-Nut oder C-Nut ist.

12. Vorrichtung nach einem der vorhergehenden Ansprüche, **dadurch gekennzeichnet, dass** der Sensor (2) ein magnetischer oder induktiver Wegsensor oder Schalter ist.

## Claims

1. A device for releasably attaching a sensor (2) into a longitudinally open attachment groove (4),
- having a cable arranged at the cable end of the sensor,
- having a rotatable clamping part (6) attached to the sensor (2), such that when the sensor (2) is introduced into the attachment groove (4), the rotatable clamping part (6) can be rotated into a clamping position (8) in which the clamping part (6) is clamped with oppositely facing inner surfaces (10) of the attachment-groove (4),
- the clamping part (6) has two clamping areas (9) facing radially outwards with respect to its axis of rotation (12), with the clamping areas (9) being located at opposite positions of the clamping part with respect to the axis of rotation (12) and forming an eccentric shape, via which the clamping part (6) is clamped between the inner surfaces (10) in the clamping position (8),
**characterised in that**
the clamping areas (9) have a structured surface (14) via which a partially shape matched connection between the clamping areas (9) and the inner surfaces (10) is formed and the clamping part (6) is arranged at the cable-end of the sensor.

2. A device in accordance with claim 1, **characterised in that** the structured surface (14) exhibits a tooth structure (18) or a saw-tooth structure, wherein a tooth direction is aligned opposite a rotational direction (24) for the clamping of the clamping part (6).

3. A device in accordance with any of the preceding claims, **characterised in that** the structured surface (14) exhibits a knurled structure.

4. A device in accordance with claim 2, **characterised in that** the saw tooth structure is made of teeth (22) which have a direction parallel to the axis of rotation (12).

5. A device in accordance with any of the preceding claims, **characterised in that** the clamping part (6) is an injection moulded metal part.

6. A device in accordance with any of the preceding claims, **characterised in that** the clamping part (6) consists of a nonmagnetic metallic material, in particular of stainless steel.

7. A device in accordance with any of the preceding claims, **characterised in that** the clamping part (6) can be attached to the sensor (2) using a plastic molding process.

8. A device in accordance with any of the preceding claims, **characterised in that** the clamping part (6) is connected axially to the sensor (2) via a stationary axle.

9. A device in accordance with any of the preceding claims, **characterised in that** the clamping part (6) can be screwed to the sensor (2) using a shoulder bolt.

10. A device in accordance with any of the preceding claims, **characterised in that** the clamping part (6) has an actuating section (28), which is formed a longitudinal slot (30), a crosshead slot, a hexagonal recess or as a Torx recess for receiving a tool for the rotation of the clamping part (6).

11. A device in accordance with any of the preceding claims, **characterised in that** the attachment groove (4) is a T-groove or a C-groove.

12. A device in accordance with any of the preceding claims, **characterised in that** the sensor (2) is a magnetic position sensor or an inductive position sensor or a switch.

## Revendications

1. Dispositif permettant d'attacher un capteur (2) de façon détachable dans une gorge de fixation (4) ouverte sur sa longueur,
- comprenant un câble, lequel est agencé à une extrémité du capteur côté câble,
- comprenant une pièce de serrage (16), mobile en rotation et reliée au capteur, qui peut être amenée, lorsque le capteur (2) est mis en place dans la gorge de fixation (4), par rotation dans une position de serrage (8) dans laquelle elle est mise sous précontrainte avec les surfaces intérieures opposées (10) de la gorge de fixation (4),
- la pièce de serrage (6) comprend deux surfaces de serrage (9), orientées radialement vers l'extérieur par rapport à son axe de rotation (12), lesquelles se trouvent à des emplacements, opposés par rapport à l'axe de rotation (12), de la pièce de serrage (6) et constituent une forme excentrique au moyen de laquelle la pièce de serrage (6) est mise sous précontrainte dans la position de serrage (8) entre les surfaces intérieures (10),
**caractérisé en ce que**
les surfaces de serrage (9) présentent une surface structurée (14) via laquelle il se forme une liaison partiellement à coopération de formes entre les surfaces de serrage (9) et les surfaces intérieures (10), et la pièce de serrage est agencée à l'extrémité du capteur côté câble.

2. Dispositif selon la revendication 1, **caractérisé en ce que** la surface structurée (14) présente une structure dentée (18) ou une structure en dents de scie, telle qu'une direction de la denture est orientée en sens opposé au sens de rotation (24) pour coincer la pièce de serrage (6).

3. Dispositif selon l'une des revendications précédentes, **caractérisé en ce que** la surface structurée (14) présente une structure moletée.

4. Dispositif selon la revendication 2, **caractérisé en ce que** la structure en dents de scie est formée par des dents (22) présentant une direction parallèle à l'axe de rotation (12).

5. Dispositif selon l'une des revendications précédentes, **caractérisé en ce que** la pièce de serrage (6) est une pièce en métal moulée par injection.

6. Dispositif selon l'une des revendications précédentes, **caractérisé en ce que** la pièce de serrage (6) est en un matériau métallique non magnétique, en particulier en acier inoxydable.

7. Dispositif selon l'une des revendications précédentes, **caractérisé en ce que** la pièce de serrage (6) est susceptible d'être reliée au capteur (2) par une opération d'injection de matière plastique.

8. Dispositif selon l'une des revendications précédentes, **caractérisé en ce que** la pièce de serrage (6) et reliée au capteur (2) via un axe stationnaire axial.

9. Dispositif selon l'une des revendications précédentes, **caractérisé en ce que** la pièce de serrage (6) est susceptible d'être vissée avec le capteur (2) via une embase à pas de vis.

10. Dispositif selon l'une des revendications précédentes, **caractérisé en ce que** la pièce de serrage (16) comprend un tronçon d'actionnement (28), qui est réalisé sous forme de fente allongée (30), de fente cruciforme, d'empreinte hexagonale ou d'empreinte de type "Torx" pour recevoir un outil destiné à faire tourner la pièce de serrage (6).

11. Dispositif selon l'une des revendications précédentes, **caractérisé en ce que** la gorge de fixation (4) est une gorge en T ou en C.

12. Dispositif selon l'une des revendications précédentes, **caractérisé en ce que** le capteur (2) est un détecteur de course ou un commutateur magnétique ou inductif.
